# EUROPEAN PATENT APPLICATION

(11) **EP 2 397 961 A2**
(43) Date of publication of application: **21.12.2011**
(21) Application number: 11155539.7
(22) Date of filing: 23.02.2011
(51) Int. Cl.: G06F 21/20

(54) **Registration method of biologic information, application method of using template and authentication method in biometric authentication**

(30) Priority: 21.06.2010 JP 2010140106
(71) Applicant: Hitachi Ltd., Tokyo (JP)
(72) Inventor: Hirata, Shinji, Chiyoda-ku Tokyo 100-8220 (JP); Takahashi, Kenta, Chiyoda-ku Tokyo 100-8220 (JP); Takata, Osamu, Chiyoda-ku Tokyo 100-8220 (JP)
(74) Representative: Calderbank, Thomas Roger

(57) **Abstract**

When a registration station appends an anonymous ID (AID), a linking validity of the anonymous ID and actual user ID (UID) is assured for an application businessperson in the case of applying to use a biometric authentication. Specifically, a biometric authentication service system includes a biometric authentication server (100), an application server (120), a registration station server (110) and a client server (130), for holding a hash value alone of personal information (P) in the registration station server, supplying again the personal information on applying to use a template (T) for the application server, collating the hash with the previously held hash, and verifying that the user applying to use the template is identical with the user registered the biologic information in the registration station server, in addition, secret information (S) different for every user is added to the personal information to generate unique data and identify the user correctly.

## Description

The present invention relates to a biometric authentication method and a system of the same for authenticating identical persons with use of personal biologic information.

An personal authentication system with use of the biologic information acquires the personal biologic information on an initial registration to extract and register information called as an amount of characteristic. This amount of characteristic to be registered is referred to as a template. On the authentication, the biologic information is acquired again from a person to extract the amount of characteristic, collate with a previously registered template and verify whether the person is an identical person.

In a system coupled a client device (referred to as client) with a server device (referred to as server) via a network, the server (hereinafter, referred to as a biometric authentication server) holds the templates typically when the server implements the biometric authentication for a user resided on the client side. The client acquires the biologic information of the user on the authentication to extract the amount of characteristic and transmit to the biometric authentication server. The biometric authentication server collates the amount of characteristic with the template to verify whether the person is an identical person.

Here, the template is information to be able to specify the person, therefore, it is required to manage strictly as personal information. Consequently, it is also required to manage strictly the biometric authentication server holding the templates, and required to have high cost. To this end, an application businessperson who cannot cover this cost cannot install the biometric authentication server, therefore, there is sometimes a difficulty to use the biometric authentication.

As measures for such problem, a method can be considered that the installation of biometric authentication is easily innovated such that the application businessperson outsources the biometric authentication function. Specifically, the application businessperson (referred to as biometric authentication service businessperson) who supplies the biometric authentication function as a service operates the biometric authentication server, and the application businessperson entrusts the templates to the biometric authentication server operated by the biometric authentication service businessperson, and the biometric authentication server acts for the process of biometric authentication. It is not required that the application businessperson operates the biometric authentication server and manages the template, so that the biometric authentication can be used in low cost.

As mentioned the method above, JP-A-2002-278941 has proposed a system. In the JP-A-2002-278941, the biometric authentication service businessperson does not have the personal information, regarding an end user, held by the application businessperson, but manages the templates alone. This is because a cost is reduced, however, the management of personal information costs deservedly. It can be supposed that an ID (identification) of the end user is also a type of the personal information, therefore, it is configured that the biometric authentication service businessperson can not know the ID directly. Specifically, the end user ID (ID1) used by the application businessperson is transformed into another ID (ID2) in an application system to then transfer to the biometric authentication service businessperson. The biometric authentication service businessperson returns a collated result for the ID2 by a collation process with use of the template corresponding to the ID2, without knowing the ID1, and the application businessperson can verify an identical person of the end user of the IDl 1 corresponding to the ID2.

In the method mentioned above, it is required that the end user implements the registration of biologic information for every application when the application to be used by the end user exists plural numbers. However, it is required that the registration of biologic information is implemented together with the verification of identical person in a face-to-face condition, and there is a problem that a burden for both the end user and application businessperson is increased, when the registration is implemented for every application.

As measures for such problem, the Japanese Patent No. 3943897 has proposed a method such that a registration station for implementing a biologic information registration and a template issue is installed. In consequence, the registration is basically set to once regardless of the number of applications to be able to reduce the burden of the registration for the end user and application businessperson. Hereinafter, a specific method will be described by replacing with a context of biometric authentication service. First, on the registration of biologic information, the registration station implements the verification for the identical person to then acquire the biologic information and generate the template. The biometric authentication server accesses to the registration station via a network etc. to then acquire the template. The end user applies an ID (template ID) assigned to the template for the application businessperson in advance so that it can use the biometric authentication service. At this case, it is not required to register the biologic information in the application. On the authentication, the user enters the template ID and biologic information to the application to be able to use the biometric authentication by the biometric authentication service businessperson.

In the past, the registration operation of biologic information has been entrusted to the application businessperson when the application businessperson uses mutually the biometric authentication service. Therefore, there is a problem that the burden regarding the registration operation for the application businessperson and end user increases.

In response, it is possible to generalize and simplify the registration operation by installing the registration station. However, it is required that an anonymous ID is appended to the template so that a management cost of the personal information is reduced in the registration station and the biometric authentication service businessperson. When the anonymous ID is appended in the registration station, there is a problem that the application businessperson cannot verify a linking validity of the anonymous ID and an actual user ID, when the user applies to use the biometric authentication to the application businessperson.

The invention may provide a registration method of biologic information, an application method of using template and an authentication method in a biometric authentication, capable of assuring the linking validity of the anonymous ID and the actual user ID for the application businessperson when applying to use the biometric authentication to the application businessperson by users, in the case of appending the anonymous ID by the registration station in a biometric authentication service system.

According to an aspect of the invention, a biometric authentication service system includes a biometric authentication server, an application server, a registration station server and a client, in which a characteristic value such as a hash value of personal information of a user is held on registering biologic information in the registration station server, the personal information is again given on applying to use a template in the application server, the characteristic value is collated with the previously held characteristic value in the registration station server, and it is verified that the user applying to use the template is identical with the user registered the biologic information in the registration station server.

According to the above-mentioned technique, the user can be identified correctly by such that secret information different for every user is added to the personal information to generate unique data for every user and collate the characteristic values.

According to the invention, the linking validity of the anonymous ID and actual user ID can be assured for the application business person when appending the anonymous ID to the template in the registration station server.

The other objects, features and advantages of the invention will become apparent from the following description of the embodiments of the invention taken in conjunction with the accompanying drawings.
In the drawings:
Fig. 1 is a block diagram showing a system configuration in an embodiment of the invention;
Fig. 2 is a block diagram showing a functional configuration of a biometric authentication server in the embodiment;
Fig. 3 is a block diagram showing a functional configuration of a registration station server in the embodiment;
Fig. 4 is a block diagram showing a functional configuration of a client in the embodiment;
Fig. 5 is a block diagram showing a functional configuration of an application server in the embodiment;
Fig. 6 is a block diagram showing a functional configuration of a parameter server in the embodiment;
Fig. 7 is a process flow diagram showing a registration process, from steps 5201 1 to S209, of biologic information in the embodiment;
Fig. 8 is a process flow diagram showing the registration process, from steps S210 to S213 continued from Fig. 7, of the biologic information in the embodiment;
Fig. 9 is a process flow diagram showing a process, from steps S301 to S306, of applying to use templates in an application in the embodiment;
Fig. 10 is a process flow diagram showing a process, from steps S307 to S309, of applying to use the templates in the application in the embodiment;
Fig. 11 is a process flow diagram showing a process, from steps S310 to S314 continued from Fig. 10, of applying to use the templates in the application in the embodiment;
Fig. 12 is a diagram showing contents of ID transformation information in the embodiment;
Fig. 13 is a process flow diagram showing an authentication process from steps S501 to S506 in the embodiment;
Fig. 14 is a process flow diagram showing the authentication process from steps S507 to S510 in the embodiment;
Fig. 15 is a block diagram showing a hardware configuration in the embodiment; and
Fig. 16 is a diagram showing a hash generation method when personal information has plural items in the embodiment.

Hereinafter, embodiments of the invention will be described with reference to the drawings.

In this embodiment, a biometric authentication service system will be described with as an example such that an application businessperson outsources a function of biometric authentication and a biometric authentication service businessperson supplies the function of biometric authentication to an application. In particular here, a system will be described with a case of transforming an amount of characteristic by using parameters to apply a cancelable biometric authentication for registering the transformed amount of characteristic so that the amount of characteristic is protected.

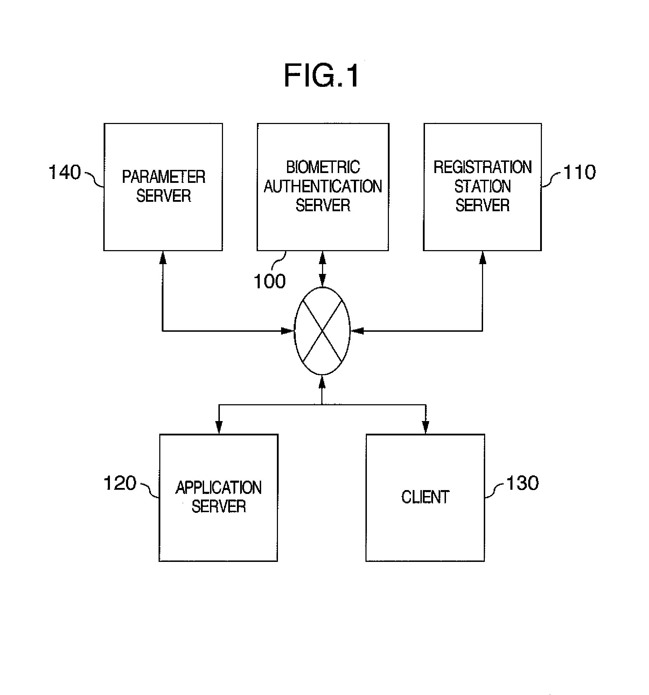

Fig. 1 shows a system configuration of the biometric authentication service system.

The biometric authentication service system in this embodiment is configured by an authentication server device (hereinafter, referred to as biometric authentication server) 100 for storing and collating templates, a registration station server device (hereinafter, referred to as registration station server) 110 for registering biologic information and assigning an anonymous ID, an application server device (hereinafter, referred to as application server) 120 for supplying applications corresponding to a result of the biometric authentication, a client device (hereinafter, referred to as client or client server) 130 for generating collation data on an authentication, and a parameter server device (hereinafter, referred to as parameter server) 140 for managing parameters of the cancelable biometric authentication. The above-mentioned elements are coupled with each other via a network such as Internet, Intranet, etc.

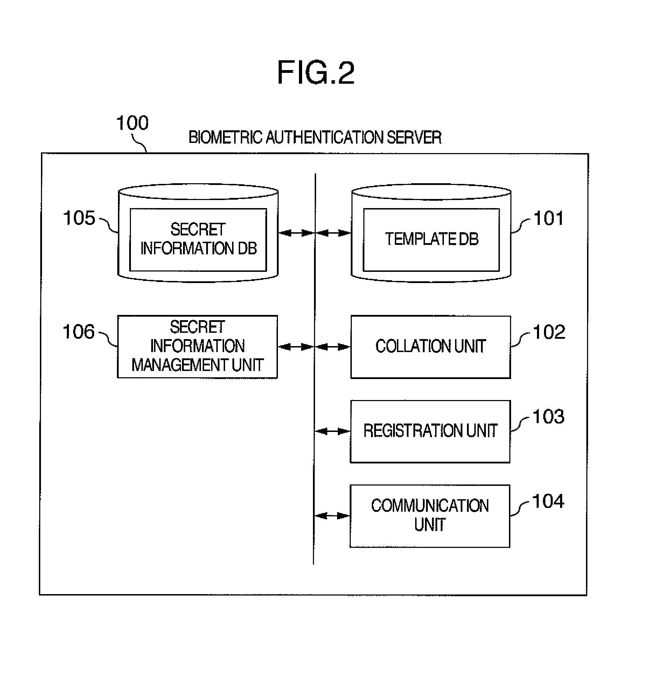

Fig. 2 shows a functional configuration of the biometric authentication server 100.

The biometric authentication server 100 is configured by a registration unit 103 having a function for registering the templates issued from the registration station server 110, a template DB (database) 101 for storing the registered templates, a collation unit 102 for implementing a collation process of the template read out from the template database 101 and collation data transmitted from the client 130 on the authentication, a secret information DB 105 for storing secret information to be determined for every user when registering the biologic information by the registration station server 110, a secret information management unit 106 having a function for managing the secret information, and a communication unit 104 having a function to be communicated with the network.

Here, the secret information is a random value, which is generated for every user when the registration station server 110 registers the biologic information. For example, random numbers generated by a pseudo-random number generator are set to the secret information. The secret information has a function for complementing a granularity of the personal information. Specifically, the function is described below.

First, in this embodiment, on the registration of biologic information, the personal information is acquired, when applying to use the personal information and template for the template in the application, to collate a characteristic value of the acquired personal information. It is therefore verified that the user applying to use the template is identical with the user registered the biologic information in the registration station server 110. In consequence, it is possible to assure a linking validity of the anonymous ID and user ID. However, when the personal information does not have a small granularity, the personal information overlaps between the users even though the characteristic value of personal information is used for the collation. Therefore, there is a possibility that the user cannot be identified correctly.

As measures for such problem, in this embodiment, the different secret information for every user is added to the personal information to generate unique data for every user, and the collation of the pieces of unique data can realizes such that the user is identified correctly. On the other hand, the personal information becomes unnecessary when it has a sufficiently high granularity to be able to identify enough the user. Therefore, the secret information DB 105 and secret information management unit 106 may be omitted since they are unnecessary, in this case.

Here, the secret information indicates the personal information having a broad meaning from information including addresses, names, telephone numbers, birth dates, etc. as supposed to be the secret information to information including passports, numbers of public identification such as certificates, bank account numbers, account numbers for specific services for such as credit cards. In addition, a password may be used as the personal information. The user can omit a procedure of issuing the identification in advance when generating the password on the registration of biologic information in the registration station server 110, so that the burden for the user can be reduced.

Here, the anonymous ID is random numbers etc., for example, such that the user cannot be specified from the anonymous ID itself, which is different from an ID actually used as a user account ID in the application. In this embodiment, the registration station server 110 generates and issues the anonymous ID to set to an index of the template. The biometric authentication server 100 manages the template by using the anonymous ID, therefore, the anonymous ID is only known even though the authentication process is implemented, so that an actual user cannot be specified. In consequence, the biometric authentication server 100 can reduce the burden regarding the management for the personal information.

Further, the following description will use a hash value calculated by using a cryptographic one-way hash function, as an example of the characteristic value.

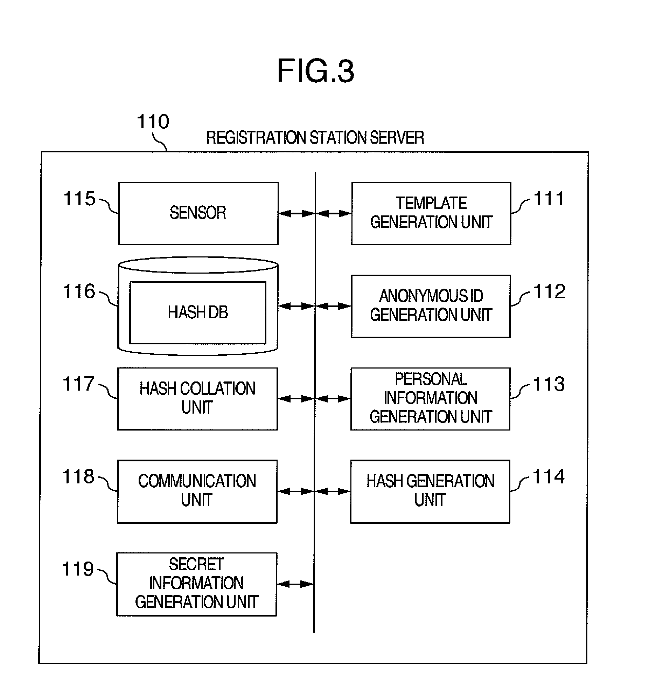

Fig. 3 shows a functional configuration of the registration station server 110.

The registration station server 110 is configured by a sensor 115 having a function for acquiring the biologic information of the user, a template generation unit 111 having a function for extracting the amount of characteristic from the acquired biologic information to generate the template, an personal information generation unit 113 having a function for indicating or entering the personal information by the user to generate the personal information as digital data, a hash generation unit 114 having a function for calculating a hash of the generated personal information, a hash DB 116 for storing the hash of the generated personal information, a hash collation unit 117 having a function for reading out the hash stored in the hash DB 116 to collate with the hash to be transmitted from the application server 120, an anonymous ID generation unit 112 having a function for generating an ID for an anonymity (hereinafter, referred to as anonymous ID) to be appended to the user, and a communication unit 118 having a function to be communicated with the network. In this regard, as mentioned above, when the personal information has the sufficiently high granularity to be able to identify enough the user, the secret information becomes unnecessary. Therefore, the secret information generation unit 119 may be omitted since it is unnecessary, in this case.

Here, the biologic information is data for such as a fingerprint image, a venous image and an iris image. The amount of characteristic includes a binarized image generated by an enhancement process of the fingerprint and venous images, a bit sequence called an iris code generated from the iris image, etc. A degree of relatedness between two amounts of characteristic is calculated by a mutual correlation, for example, and by other manners.

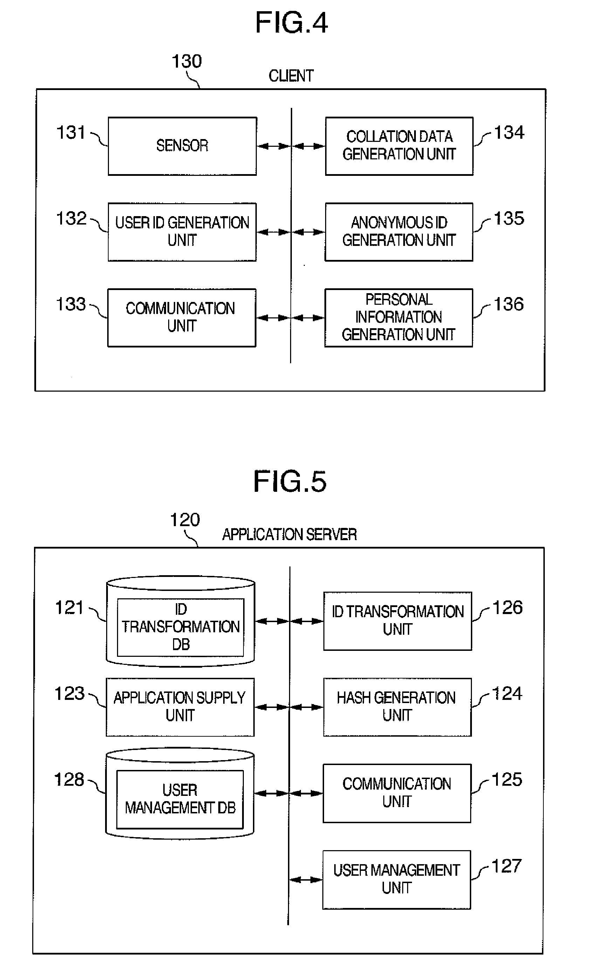

Fig. 4 shows a functional configuration of the client 130. The client 130 is configured by a sensor 131 having a function for acquiring the biologic information of user, a collation data generation unit 134 having a function for extracting the amount of characteristic from the acquired biologic information to generate the collation data, an personal information generation unit 136 having a function for indicating or entering the user's own personal information by the user to generate the personal information as digital data, an anonymous ID generation unit 135 having a function for indicating or entering the user's own anonymous ID by the user to generate the anonymous ID as digital data, a user ID generation unit 132 having a function for indicating or entering a user account ID (hereinafter, referred to as user ID) of the application by the user to generate the user ID as digital data, and a communication unit 133 3 having a function to be communicated with the network.

Fig. 5 shows a functional configuration of the application server 120. The application server 120 is configured by a hash generation unit 124 having a function for generating the hash of personal information transmitted from the client 130, an ID transformation table generation unit 122 having a function for generating an ID transformation table as a correspondence table of the user ID and anonymous ID in the client 130, an ID transformation table DB 121 for storing the ID transformation table, an ID transformation unit 126 having a function for reading out the ID transformation table to transform the user ID to the anonymous ID on the authentication, an application supply unit 123 having a function for supplying application services to the user, and a communication unit 125 having a function to be communicated with the network.

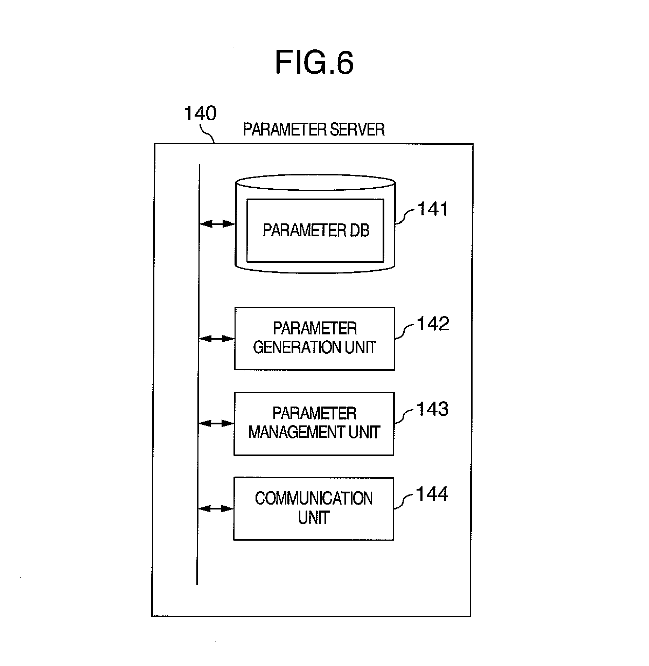

Fig. 6 shows a functional configuration of the parameter server 140. The parameter server 140 is a server for generating and managing the parameters corresponding to keys used for a transformation process of the cancelable biometric authentication, and configured by a parameter generation unit 142 having a function for generating the parameters, a parameter DB 141 for storing the parameters, a parameter management unit 143 having a function for managing a parameter transmission etc., and a communication unit 144 having a function to be communicated with the network. In this regard, when the user manages the parameter, for example, holds in a recording medium or stores a password, the parameter server 140 may be omitted since it is unnecessary. Further, when it is assumed that a leak risk of the template is low, the parameter becomes unnecessary since it is unnecessary to apply the cancelable biometric authentication. Therefore, the parameter server 140 for generating, managing, etc. the parameters may be omitted.

Here, the cancelable biometric authentication is a biometric authentication method having an effect capable of protecting the templates, in which the amount of characteristic is transformed by a predetermined function (type of encryption) and a secret parameter (type of encryption key) on registering the biologic information to then be stored in a server as a template with a condition where original information is kept secret, the amount of characteristic of the biologic information extracted newly by the client on the authentication is transformed by using the same function and parameter to be transmitted to the server, and the server collates the received amount of characteristic with the template in a condition where the amount of characteristic is kept transformed. According to this method, the transformed parameter is kept secret, in consequence, the server cannot know the original amount of characteristic even on the authentication, so that an personal privacy can be protected. Even when leaking the template, the transformed parameter is changed to again generate and register the template, so that a security can be maintained. Further, when previously used the same biologic information is used for a different system, the templates transformed respectively by different parameters are registered. Therefore, it can be prevented that the security lowers for another system even though one template is leaked. In addition, the concept of cancelable biometric authentication has been described in a document of "N. K. Ratha, J. H. Connell, R. M. Bolle, 'Enhancing Security and Privacy in Biometric-based Authentication Systems.' IBM System Journal 40(3) (2001)." Further, a specific realization method for the cancelable biometric authentication can use a method described in US-A-2008/0037833, when the degree of relatedness of two images can be calculated by the mutual correlation in such a way that the biometric authentication is based on an image matching, for example, a finger vein authentication.

In this embodiment, the cancelable biometric authentication is applied to the biometric authentication service system, so that the user can obtain a secure feeling from a viewpoint of the privacy by entrusting the biologic information to the biometric authentication server 100, at the same time, the biometric authentication server 100 can reduce the leak risk of biologic information. In this regard, it is unnecessary to apply the cancelable biometric authentication when it is assumed that the leak risk of template is low.

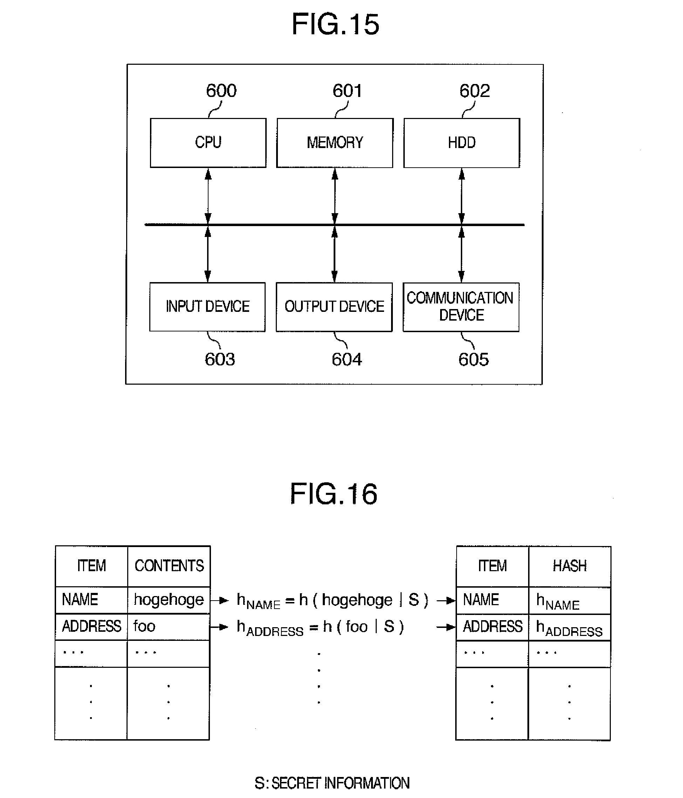

Fig. 15 shows a hardware configuration including a CPU 600, a memory 601, a HDD 602, an input device 603, an output device 604 and a communication device 605. This configuration is commonly provided in the biometric authentication server 100, registration station server 110, application server 120 and client (client server) 130.

The above-mentioned functional configuration including the biometric authentication server 100, registration station server 110, application server 120 client 130, parameter server 140 and the following descriptive processes, are realized by executing programs stored in the memory 601 and/or HDD 602 through the CPU 600. The respective programs may be stored in the memory 601 and/or HDD 602 in advance, and may also be introduced from a removable storage medium capable of using in this system and from other devices via a carrier wave or a digital signal propagated on a communication network as a communication medium, as required.

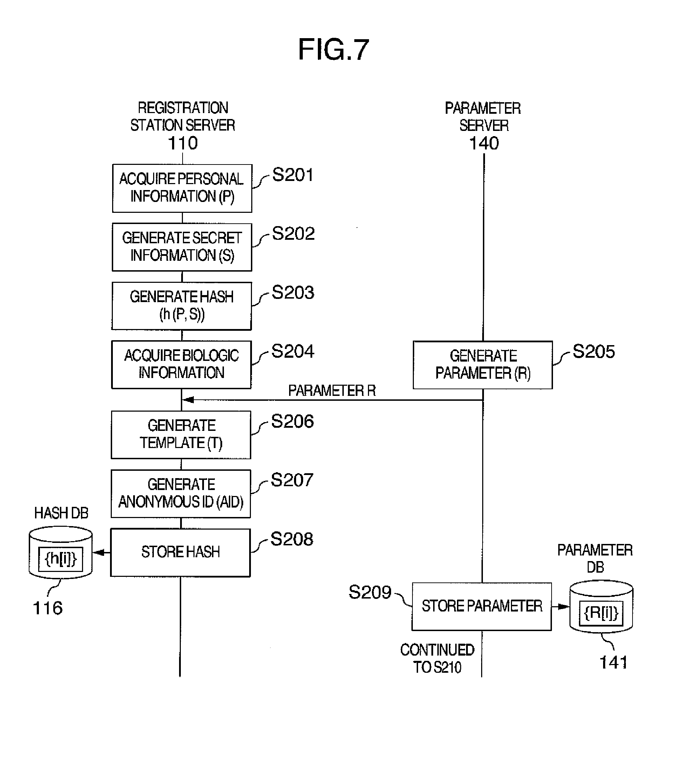

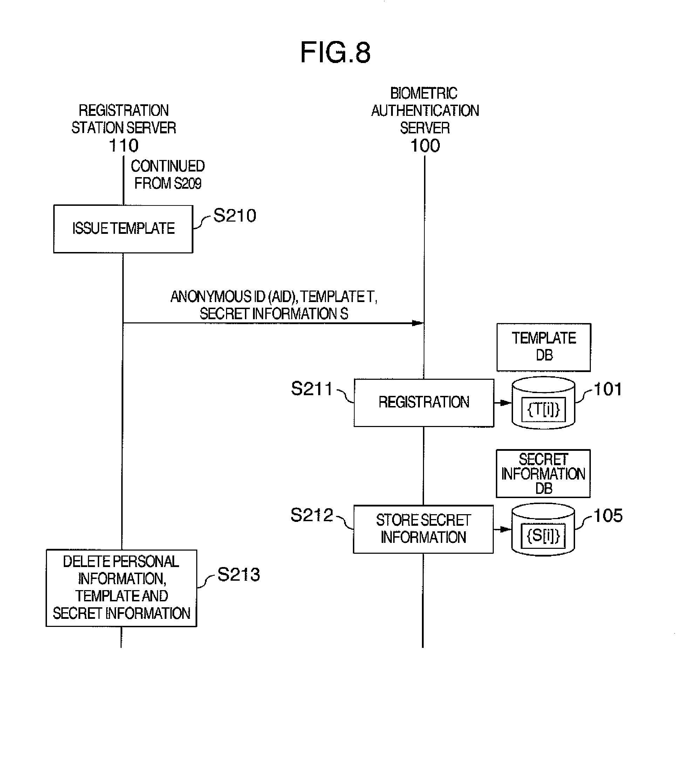

Next, a process flow of registering the biologic information in this embodiment will be described with reference to Fig. 7 and Fig. 8.

The personal information generation unit 113 acquires the personal information indicated or entered by the user to store temporarily in the memory 601 as digital data, at a step S201.

The secret information generation unit 119 generates secret information S different for every user, at a step S202. Here, the secret information S is a random value and generated for every user when registering the biologic information by the registration station server 110. For example, the random numbers generated by the pseudo-random number generator are set to the secret information S. In addition, the function and effect of the secret information S has been described in the explanation of biometric authentication server 100 in the above-mentioned system configuration in this embodiment. In this regard, the secret information S becomes unnecessary when the personal information P has the sufficiently high granularity to be able to identify enough the user. Therefore, this step may be omitted.

The hash generation unit 114 generates a hash value h (P, S) of data combined the personal information P generated at the step S201 with the secret information S generated at the step S202, at a step S203. Here, a method of combining the personal information P with the secret information S may use a simple bit sequence. A hash generation method uses a cryptographic one-way hash function, for example, SHA-2. In consequence, it becomes difficult that the personal information P and secret information S are presumed from the hash value.

The biometric authentication server 100 and registration station server 110 have the hash value combined the personal information P with the secret information S, but does not have the personal information itself. In consequence, the application server 120 collates the hash value of the personal information P, when applying to use the template by the application, to be able to verify that the user applying to use the template is identical with the user registered the biologic information by the registration station server 110.

In this way, the registration station server 110 can assure the linking validity of the anonymous ID and user ID for the application server 120, without having the personal information itself. In this regard, as mentioned at the step S202, when the personal information P has the sufficiently large granularity to be able to identify enough the user, the secret information S becomes unnecessary. Therefore, a mere hash value h (P) of the personal information P may be generated, without combining with the secret information S at this step.

In addition, when the personal information P has plural items, the personal information P may be combined with the secret information S for every item. An example of combining for every item will be described with reference to Fig. 16. In the case where there are a name, an address, etc., for example, as items of the personal information P, the hash is calculated by combining the secret information S with the respective items. The secret information S may be different for every item or may be the same. The combination method is set to the bit sequence. Assuming that the hash of combination with the secret information S is set to name, hₙₐₘₑ = h (hogehoge | S) when the name is a hogehoge. Assuming that the hash combination with the secret information S is set to h_{address}, h_{address} = h (too S) when the address is a foo. A group of the hashes for every item is set in a table. A necessary item among the pieces of personal information is different depending on the application, therefore, the hash alone for the necessary item is extracted to collate for every item in the collation of hash.

The sensor 115 acquires the biologic information indicated by the user, at a step S204.

The parameter generation unit 142 generates a parameter R in response to a request from the registration station server 110, at a step S205. The parameter is data used for transforming the amount of characteristic in the cancelable biometric authentication. A generation method of the parameter R can use a method described in the US-A-2008/0037833, in the case of the finger vein image. Specifically, a two-dimensional random filter may be made up such that a value for respective elements becomes the random numbers. The random numbers are generated by using the pseudo-random number generator etc. The generated parameter R is transmitted to the registration station server 100.

In this regard, when it is assumed that the leak risk of template is low, the parameter becomes unnecessary since it is unnecessary to apply the cancelable biometric authentication, therefore, this step may be omitted.

This embodiment corresponds to an application example of a 1 : 1 cancelable collation. Besides, a 1 : N cancelable collation is applicable as another example. In this case, the parameter is not different for every user, and common data for the users may be used in this step. In addition, when applying the 1 : N cancelable collation, it is unnecessary that the user stores ID or records it in a recording medium since the user can verify the identical person without entering the ID on the authentication. Therefore, the convenience for user can be improved.

In addition, when the user manages the parameter, for example, holds it in the recording medium or stores as password, the registration station server 110 may generate the parameter at this step since the parameter server 140 becomes unnecessary.

The template generation unit 111 extracts the amount of characteristic from the biologic information acquired at the step S204 to then transform the amount of characteristic by using the parameter acquired at the step S205 and generate a template T, at a step S206. Here, a method of extracting the amount of characteristic can use a method described in a document of "N. Miura, A. Nagasaka, T. Miyatake, 'Feature Extraction of Finger-vein Patterns Based on Repeated Line Tracking and Its Application to Personal Identification.' Machine Vision and Applications 15(4) (2004) 194-203," in the case of the finger vein image, for example.

When a transformation method with use of the parameter uses an algorism capable of calculating the degree of relatedness of two images by the mutual correlation in such a way that the biometric authentication is based on the image matching, for example, the finger vein authentication, the algorism (correlation-invariant random filtering) has been known to calculate the degree of relatedness such that a specialty transformation is applied to the two images to then be kept secret without returning them to an original state (referred to US-A-2008/0037833 in detail). In this case, first, an image x is applied with a basis transformation (number-theoretic transform, Fourier transformation, etc.), thereafter, data of the basis transformation is set to X, in the transformation process. Next, a random filter is multiplied to every pixel for X. This is a typical example of the transformation process, however, other methods may be used.

In this regard, when it can be assumed that the leak risk of template is low, the transformation with use of the parameter becomes unnecessary since the application for the cancelable biometric authentication is unnecessary. Therefore, the transformation is omitted at this step, and the template may be generated directly from the amount of characteristic.

The anonymous ID generation unit 112 generates the anonymous ID (called AID) as an index assigned to the hash value h (P, S) and the template T, at a step 5207. The anonymous ID (AID) is generated randomly. The random numbers are generated by using the cryptographic pseudo-random number generator and this is used in this process. In addition, the function and effect of anonymous ID has been described in the explanation of biometric authentication server 100 in the above-mentioned system configuration of the embodiment.

The registration station server 110 stores the hash value h (P, S) generated at the step S203 in the hash DB 116, at a step S208. At this time, the hash value h (P, S) is stored together with the anonymous ID (AID), and the hash value h (P, S) is set to be able to read out as set AID to a key. In this regard, as mentioned at the step S202, when the personal information P has the sufficiently high granularity to be able to identify enough the user, the mere hash value h (P) of the personal information P may be stored at this step since the secret information S becomes unnecessary.

The parameter management unit 143 stores the parameter R generated at the step S205 in the parameter DB 141, at a step S209. In this regard, when it can be assumed that the leak risk of template is low, the parameter becomes unnecessary since the application for the cancelable biometric authentication is unnecessary, therefore, this step may be omitted.

This embodiment corresponds to the application example of the 1 : 1 cancelable collation. Besides, the 1 : N cancelable collation is applicable as another example. In this case, the parameter is not different for every user, and the common data for the users may be used in this step.

In addition, when the user manages the parameter, for example, holds it in the recording medium or stores as the password, the parameter may be written in the recording medium or transferred to the user as the password at this step since the parameter server 140 becomes unnecessary.

The registration station server 110 issues the template T generated at the step S206, the secret information S generated at the step S202 and the AID generated at the step S207 to the biometric authentication server 100, at a step S210. In this regard, as mentioned at the step S202, when the personal information P has the sufficiently high granularity to be able to identify enough the user, the issue of secret information S can be omitted at this step since it becomes unnecessary.

The registration unit 103 registers the template T acquired from the registration station server 110 at the step S210 in the template DB 101, at a step S211. At this time, the table of template DB 101 is set previously so as to be able to search as set the AID to a key.

The secret information management unit 106 stores the secret information S acquired from the registration station server 110 at the step S210 in the secret information DB 105, at a step S212. At this time, the table of secret information DB 105 is set previously so as to be able to search as set the AID to a key. In this regard, as mentioned at the step S202, when the personal information P has the sufficiently high granularity to be able to identify enough the user, this step becomes unnecessary since the secret information S is unnecessary, therefore, this step can be omitted.

The registration station server 110 verifies that the biometric authentication server 100 registers the template T, thereafter, deletes the personal information P, template T and secret information S stored previously in the memory 601, at a step S213. In consequence, it is unnecessary that the biometric authentication server 100 and registration station server 110 have the personal information itself. In this regard, as mentioned at the step S202, when the personal information P has the sufficiently high granularity to be able to identify enough the user, the process of deleting the secret information S can be omitted at this step since the secret information S becomes unnecessary.

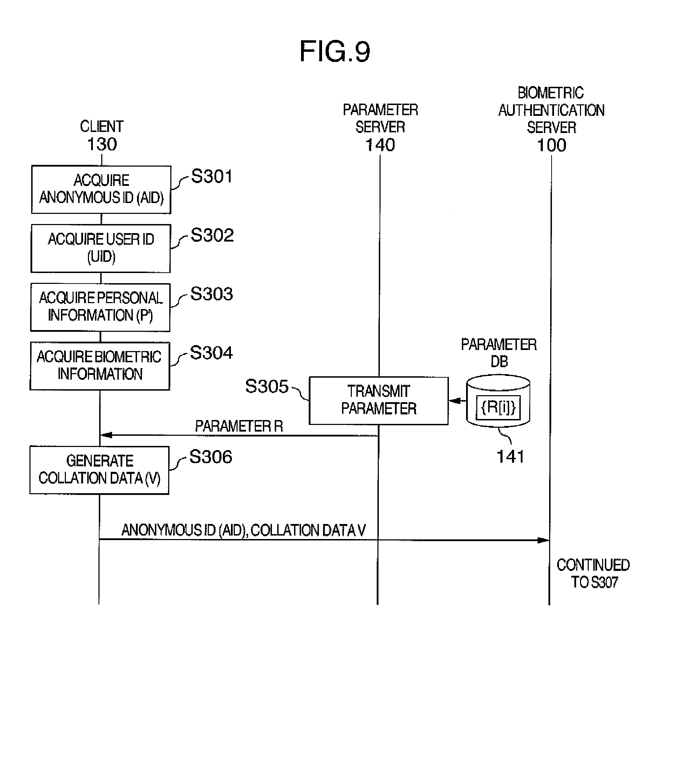

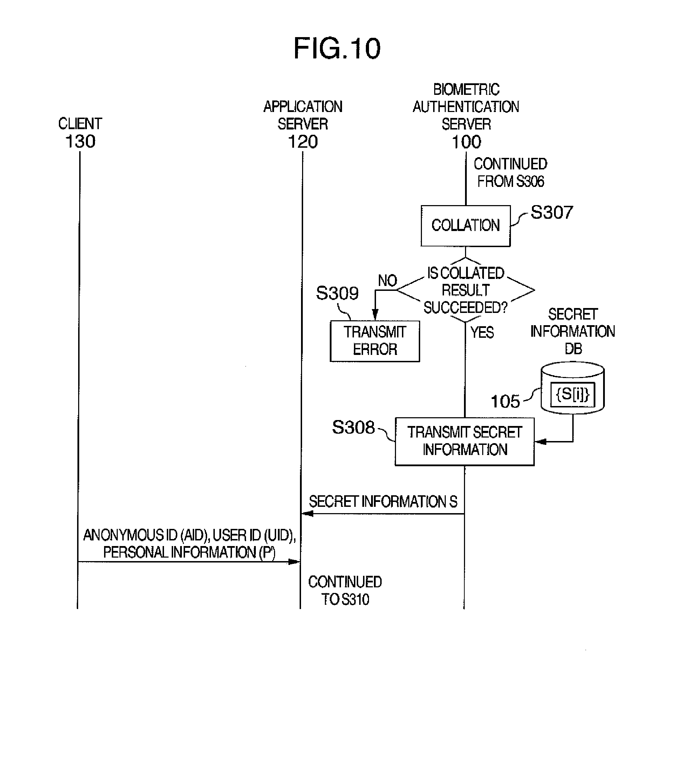

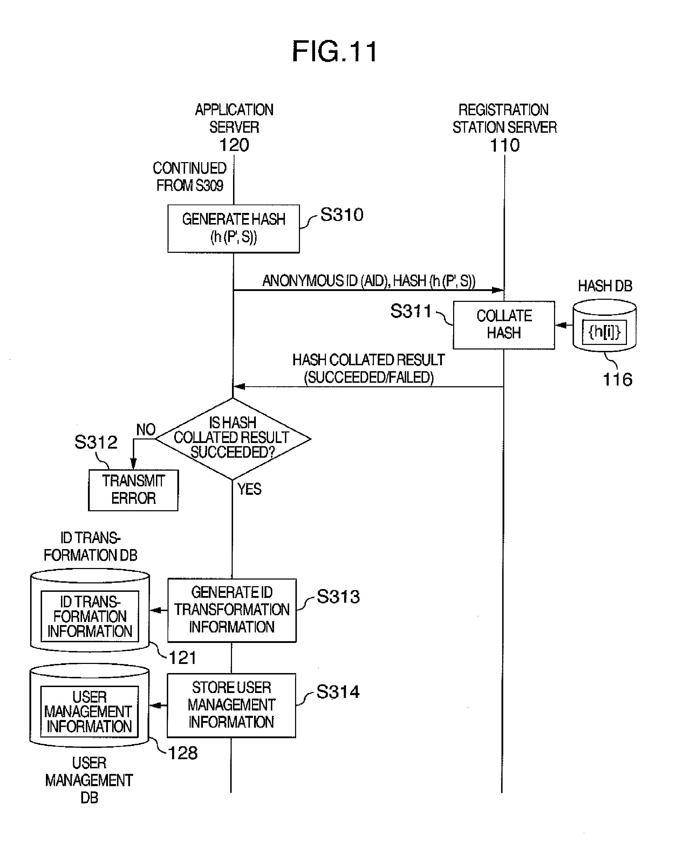

Next, a processing flow of applying to use the template in the application, in this embodiment, will be described with reference to Fig. 9, Fig. 10 and Fig. 11.

The anonymous ID generation unit 135 generates the anonymous ID (hereinafter, AID) as digital data on the basis of the information indicated or entered by the user to store temporarily in the memory 601, at a step S301. The anonymous ID is generated randomly. For example, the random numbers are used such that they are generated by the pseudo-random number generator. In addition, this embodiment corresponds to the application example of the 1 : 1 cancelable collation. Besides, the 1 : N cancelable collation is applicable as another example. In this case, this step may be omitted since it is unnecessary to indicate or enter the anonymous ID (AID) by the user. Further, the effect of applying the 1 : N cancelable collation has been described in the explanation at the step S205.

The user ID generation unit 132 generates the user ID (hereinafter, UID) as digital data on the basis of the information indicated or entered by the user to store temporarily in the memory 601, at a step S302.

The personal information generation unit 136 generates the personal information P as digital data on the basis of the information indicated or entered by the user to then store temporarily in the memory 601, at a step S303.

The sensor 131 acquires the biologic information of the user, at a step S304. In this regard, as mentioned at the step S202, when the personal information P has the sufficiently high granularity to be able to identify enough the user, the process of cancelable biometric authentication becomes unnecessary since the secret information S is unnecessary. Therefore, this step can be omitted in this case.

The parameter management unit 143 searches the parameter DB 141 as set the anonymous ID (AID) to a key, in response to a request from the client 130 to read out the corresponding parameter R and transmit to the client 130, at a step S305. In this regard, as mentioned at the step S304, when the personal information P has the sufficiently high granularity to be able to identify enough the user, the process of cancelable biometric authentication becomes unnecessary since the secret information S is unnecessary. Therefore, this step can be omitted in this case.

When it can be assumed that the leak risk of template is low, the parameter becomes unnecessary since a normal biometric authentication may be implemented without necessary to apply the cancelable biometric authentication, therefore, this step may be omitted.

This embodiment corresponds to the application example of the 1 : 1 cancelable collation. Besides, the 1 : N cancelable collation is applicable as another example. In this case, the search of parameter DB 141 as set the anonymous ID (AID) to a key may be omitted at this step since the parameter can be set to common data for the user. In addition, the effect of applying the 1 : N cancelable collation has been described in the explanation at the step S205.

In addition, when the user manages the parameter, for example, holds it in the recording medium or stores as the password, the user may indicates the recording medium or enters the password from the client 130 at this step since the parameter server 140 becomes unnecessary.

The collation data generation unit 134 extracts the amount of characteristic from the biologic information acquired at the step S304 to then transform the amount of characteristic by using the parameter R acquired at the step S305 and generate collation data V, at a step S306. The generated collation data V is transmitted to the biometric authentication server 100. Here, a method of extracting the amount of characteristic can use the method described in the document of "N. Miura, A. Nagasaka, T. Miyatake, `Feature Extraction of Finger-vein Patterns Based on Repeated Line Tracking and Its Application to Personal Identification.' Machine Vision and Applications 15(4) (2004) 194-203." The transformation method with use of the parameter can use the method described in the document of the US-A-2008/0037833, in the case of the finger vein authentication, for example.

In this regard, as mentioned at the step S304, when the personal information P has the sufficiently high granularity to be able to identify enough the user, the process of cancelable biometric authentication becomes unnecessary since the secret information S is unnecessary. Therefore, this step can be omitted in this case. When it can be assumed that the leak risk of template is low, the transformation with use of the parameter becomes unnecessary at this step since the normal biometric authentication may be implemented without necessary to apply the cancelable biometric authentication. The collation data V may also be generated directly from the amount of characteristic.

The biometric authentication 100 receives the collation data V transmitted from the client 130 to search the template DB 101 as set the anonymous ID (AID) to a key, read out the corresponding template T and collate the template T with the collation data V, at a step S307. A collation method in the cancelable biometric authentication can use the method described in the US-A-2008/0037833, in the case of the finger vein authentication, for example. In this regard, as mentioned at the step S304, when the personal information P has the sufficiently high granularity to be able to identify enough the user, the process of cancelable biometric authentication becomes unnecessary since the secret information S is unnecessary. Therefore, this step can be omitted in this case. When it can be assumed that the leak risk of template is low, the normal collation method of biometric authentication may be used in this step without using the collation method specific to the above-mentioned cancelable biometric authentication, since the normal biometric authentication may be implemented without necessary to apply the cancelable biometric authentication. The method described in the document of "N. Miura, A. Nagasaka, T. Miyatake, 'Feature Extraction of Finger-vein Patterns Based on Repeated Line Tracking and Its Application to Personal Identification.' Machine Vision and Applications 15(4) (2004) 194-203" etc. can be used in the case of the finger vein authentication, for example. Further, this embodiment corresponds to the application example of the 1 : 1 cancelable collation. Besides, the 1 : N cancelable collation is applicable as another example. In this case, the search of template DB 101 as set the anonymous ID (AID) to a key may be omitted at this step since the collation can be implemented for the entire template DB 101 by a method etc. of repeating a sequential collation. In addition, the effect of applying the 1 : N cancelable collation has been described in the explanation at the step S205. When applying the 1 : N cancelable collation, a collated result becomes the anonymous ID (AID).

When the collated result is succeeded for the collation, the secret information management unit 106 searches the secret information DB 105, as set the anonymous ID (AID) to a key, to read out the corresponding secret information S and transmit to the application server 120, at a step S308. In this regard, as mentioned at the step 5304, when the personal information P has the sufficiently high granularity to be able to identify enough the user, this step can be omitted since the secret information S is unnecessary. This embodiment corresponds to the application example of the 1 : 1 cancelable collation. Besides, the 1 : N cancelable collation is applicable as another example. In this case, the secret information DB 105 may be searched as set the anonymous ID (AID) to a key since the collated result becomes the anonymous ID (AID), in this step. In addition, the effect of applying the 1 : N cancelable collation has been described in the explanation at the step S205.

When the collated result is failed for the collation, the biometric authentication server 100 transmits an error to the application server 120 to then terminate the process, at a step S309. In this regard, as mentioned at the step S304, when the personal information P has the sufficiently high granularity to be able to identify enough the user, this step can be omitted since the secret information S is unnecessary.

The hash generation unit 124 generates a hash value h (P ' , S) of data combined personal information P' received from the client 130 with the secret information S received from the biometric authentication server 100, at a step S310. Here, a method of combining the personal information P' with the secret information S may use a mere bit sequence, for example. The hash generation method has been described in the explanation at the step S203. In this regard, as mentioned at the step S304, when the personal information P has the sufficiently high granularity to be able to identify enough the user, a mere hash value h (P') of the personal information P' may be generated at this step, without combining with the secret information S, since the secret information S is unnecessary.

In addition, when the secret information S has plural items, the secret information S may be combined for every item. The detail has been described in the explanation at the step S203.

The hash collation unit 117 searches the hash DB 116 as set the anonymous ID (AID) received from the application server 120 to a key to read out the corresponding hash value h (P, S) and collate the hash value (P', S) of the personal information P' received from the application server 120 with the hash value h (P, S), at a step S311. In this regard, as mentioned at the step S304, when the personal information P has the sufficiently high granularity to be able to identify enough the user, the mere hash value h (P) and h (P') of the personal information P and P' may be collated respectively with each other in this step, without combining with the secret information S, since the secret information S is unnecessary.

In addition, when the secret information S has plural items, the hash may be collated for every item. The detail has been described in the explanation at the step S203.

When the collated result of the hash value is failed, the ID transformation unit 126 transmits the error to the client 130 to then terminate the process, at a step S312.

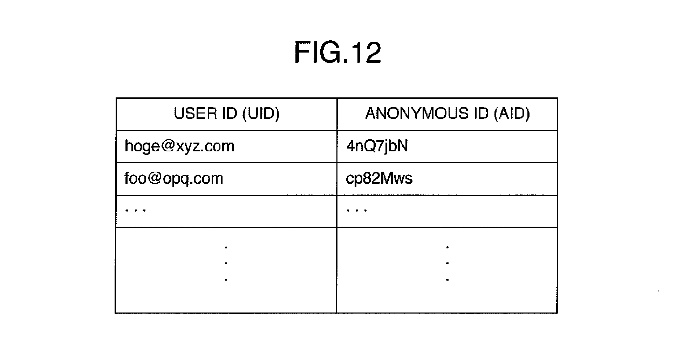

When the collated result of the hash value is succeeded, the ID transformation unit 126 generates ID transformation information to then store in the ID transformation DB 121, at a step S313. Here, the ID transformation information is a correspondence table of the user ID (UID) and anonymous ID (AID), or a table to be referred to when transforming the UID to AID (or AID to UID) by the application server 120. Fig. 12 shows an example of the ID transformation information. Here, the user ID uses mail addresses as an example, and the anonymous ID is random numbers assigned to the template at the step S205 in the registration station server 110. The anonymous ID and user ID can be transformed one another by referring to the table.

In addition, a method of using a cryptographic function may be used as an example of another ID transformation method. A standard symmetric-key cryptography algorism, such as AES etc. is used as cryptographic function, for example. Assuming that the cryptographic function is set to Enc (·), a decoding function to Dec (·) and a key to K, the anonymous ID = Enc (user ID, K) and the user ID = Dec (anonymous ID, K). A requirement to be satisfied for the anonymous ID is satisfied since the anonymous ID to be generated becomes random numbers in accordance with the property of cryptographic function. In this case, the key K may be stored as ID transformation information in the ID transformation DB 121.

The user management unit 127 generates user management information on the basis of the personal information P' of user to store in the user management DB 128, at a step S314. Here, the user management information is information, containing the personal information such as names etc. and an application usage history, used for managing the user by the application server 120.

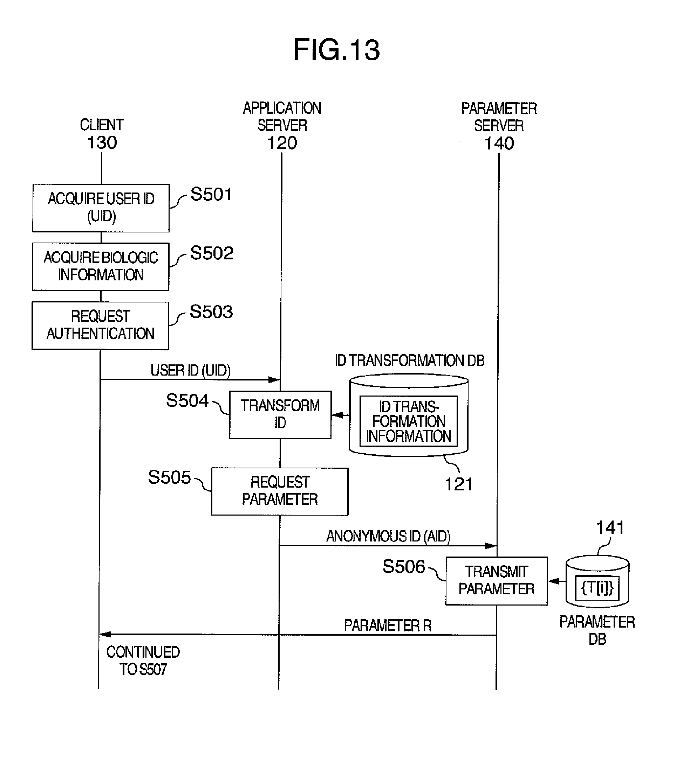

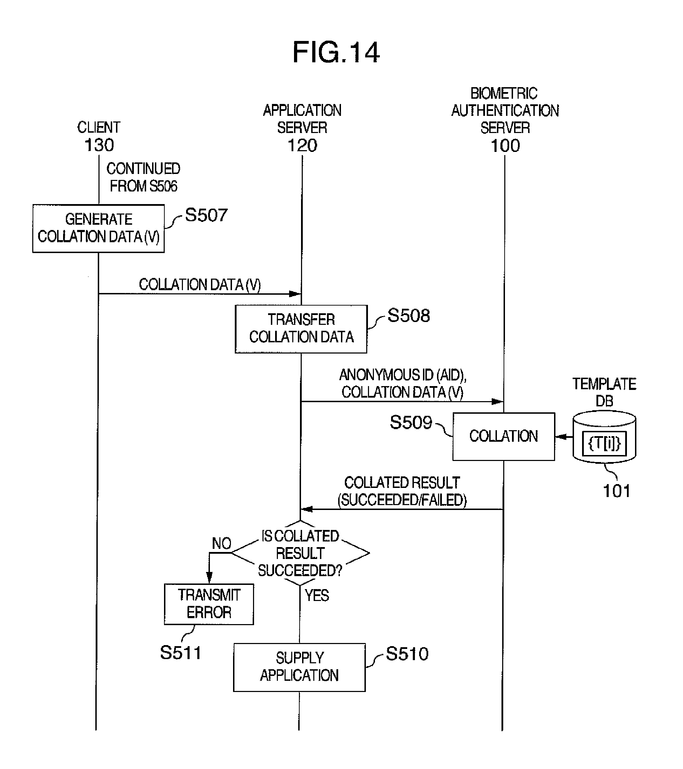

Next, a process flow on the authentication in this embodiment will be described with reference to Fig. 13 and Fig. 14.

The user ID generation unit 132 generates the user ID (hereinafter, UID) as digital data on the basis of the information indicated or entered by the user to store temporarily in the memory 601, at a step S501. In this regard, this embodiment corresponds to the application example of the 1 : 1 cancelable collation. Besides, the 1 : N cancelable collation is applicable as another example. In this case, this step may be omitted since the indication or entering by the user ID is unnecessary. In addition, the effect of applying the 1 : N cancelable collation has been described in the explanation at the step S205.

The sensor 131 acquires the biologic information from the user, at a step S502.

The client 130 transmits an authentication request together with the user ID to the application server 120, at a step S503. In this regard, this embodiment corresponds to the application example of the 1 : 1 cancelable collation. Besides, the 1 : N cancelable collation is applicable as another example. In this case, the transmission of the user ID to the application server 120 may be omitted in this step since the indication or entering of the user ID is unnecessary.

The ID transformation unit 126 reads out the ID transformation information from the ID transformation DB 121 to transform the user ID (UID) to the anonymous ID (AID), at a step S504. In this regard, this embodiment corresponds to the application example of the 1 : 1 cancelable collation. Besides, the 1 : N cancelable collation is applicable as another example. In this case, this step may be omitted since the indication or entering of the user ID is unnecessary and the transformation of ID is also unnecessary.

The application server 120 transmits a notification together with the anonymous ID (AID) for requesting the parameter to the parameter server 140, at a step S505. In this regard, when it can be assumed that the leak risk of template is low, the request for the parameter becomes unnecessary since the normal collation method of biometric authentication may be implemented without necessary to apply the cancelable biometric authentication. Therefore, this step may be omitted.

Further, this embodiment corresponds to the application example of the 1 : 1 cancelable collation. Besides, the 1 : N cancelable collation is applicable as another example. In this case, the transmission of the anonymous ID (AID) to the parameter server 140 may be omitted at this step since the parameter may use the common data for the user without different for every user.

In addition, when the user manages the parameters, for example, holds it in the recording medium or stores as passwords, this step may be omitted since the parameter server 140 becomes unnecessary.

The parameter management unit 143 searches the parameter DB 141 as set the anonymous ID (AID) to a key in response to the request from the application server 120 to read out the corresponding parameter R and transmit to the client 130, at a step S506. In this regard, when it can be assumed that the leak risk of template is low, the parameter becomes unnecessary since the normal biometric authentication may be implemented without necessary to apply the cancelable biometric authentication. Therefore, this step may be omitted.

This embodiment corresponds to the application example of the 1 : 1 cancelable collation. Besides, the 1 : N cancelable collation is applicable as another example. In this case, the search of the parameter DB 141 as set the anonymous ID (AID) to a key may be omitted at this step since the parameter may use the common data for the user without different for every user.

In addition, when the user manages the parameter, for example, holds it in the recording medium or stores as passwords, either the parameter may be read out from the recording medium of user or generated from the entered password at this step since the parameter server 140 becomes unnecessary.

The collation data generation unit 134 extracts the amount of characteristic from the biologic information acquired at the step S502 to then transform the amount of characteristic by using the parameter R acquired at the step S506 and generate the collation data V, at a step S507. The generated collation data V is transmitted to the application server 120. Here, a method of extracting the amount of characteristic can use the method described in the document of "N. Miura, A. Nagasaka, T. Miyatake, 'Feature Extraction of Finger-vein Patterns Based on Repeated Line Tracking and Its Application to Personal Identification.' Machine Vision and Applications 15(4) (2004) 194-203," in the case of the finger vein image. The transformation method with use of the parameter can use the method described in the US-A-2008/0037833, in the case of the finger vein authentication, for example. In this regard, when it can be assumed that the leak risk of template is low, the transformation with use of the parameter becomes unnecessary at this step since the normal biometric authentication may be implemented without necessary to apply the cancelable biometric authentication. The collation data V may be generated directly from the amount of characteristic.

The application server 120 transfers the collation data V, received from the client 130, together with the anonymous ID (AID) acquired at the step S504 to the biometric authentication server 100, at a step S508. In this regard, this embodiment corresponds to the application example of the 1 : 1 cancelable collation. Besides, the 1 : N cancelable collation is applicable as another example. In this case, the transmission of the anonymous ID to the biometric authentication server 100 may be omitted at this step since the indication or entering of the user ID is unnecessary.

The collation unit 102 searches the template DB 101, as set the anonymous ID (AID) to a key, to read out the corresponding template T and collate with the collation data V received at the step S508, at a step S509. A collation method in the cancelable biometric authentication can use the method described in the US-A-2008/0037833, in the case of the finger vein authentication etc. In this regard, when it can be assumed that the leak risk of template is low, the normal collation method of biometric authentication may be implemented at this step without using the collation method specific to the above-mentioned cancelable biometric authentication, since the normal biometric authentication may be implemented without necessary to apply the cancelable biometric authentication. Therefore, the method described in the document of "N. Miura, A. Nagasaka, T. Miyatake, `Feature Extraction of Finger-vein Patterns Based on Repeated Line Tracking and Its Application to Personal Identification.' Machine Vision and Applications 15(4) (2004) 194-203" can be used in the case of the finger vein authentication, for example. This embodiment corresponds to the application example of the 1 : 1 cancelable collation. Besides, the 1 : N cancelable collation is applicable as another example. In this case, the search of the template DB 101 as set the anonymous ID (AID) to a key may be omitted at this step since the collation can be implemented for the entire template DB 101 by a method of repeating the sequential collation, for example. In addition, the effect of applying the 1 : N cancelable collation has been described in the explanation at the step S205. When applying the 1 : N cancelable collation, the collated result becomes the anonymous ID (AID).

The application supply unit 123 receives the collated result from the biometric authentication server 100 to supply the application to the client 130 if the collated result is correct, at a step S510. In this regard, this embodiment corresponds to the application example of the 1 : 1 cancelable collation. Besides, the 1 : N cancelable collation is applicable as another example. In this case, the application supply unit 123 may specify the user on the basis of the resulted user ID (UID) transformed the anonymous ID (AID) by the ID transformation unit 126 to then supply the application at this step since the collated result becomes the anonymous ID (AID).

When the collated result is incorrect, an error is transmitted to the client 130 to then terminate the process, at a step S511.

According to the above-mentioned embodiment, the registration station server 110 can assure the linking validity of the user ID and the anonymous ID for the application server 120 without having the personal information itself. This is realized by verifying that the hash value alone of the personal information P is stored in the registration station server 110 to then collate with it and the user applying to use the template is identical with the user registered the biologic information in the registration station server 110. At this time, the registration station server 110 can reduce the burden regarding the management of personal information since it does not have the personal information.

Further, the user discloses the anonymous ID alone for the biometric authentication server 100 to be able to be subject to the authentication with a condition where the user ID in the application is kept secret. This can be realized by transforming the user ID to the anonymous ID in the application server 120 and implementing the management of template by the anonymous ID alone in the biometric authentication server 100. In consequence, the biometric authentication serve 100 can reduce the burden regarding the management of personal information since it does not have the personal information.

The cancelable biometric authentication is applied to the biometric authentication service system, so that the user can obtain the secure feeling from the viewpoint of privacy by entrusting the biologic information to the biometric authentication server 100, at the same time, the biometric authentication server 100 can reduce the leak risk of biologic information. In this regard, it is unnecessary to apply the cancelable biometric authentication when it is assumed that the leak risk of template is low.

In the collation of the hash values of the personal information, the secret information different for every user is added to the personal information to generate the unique data for every user and be able to identify the user correctly by collating the hash values. Even when the personal information P does not have the small granularity, it solves the problem that the user cannot be identified correctly since there is a possibility to overlap the hash value between the users.

In addition, when the personal information has the sufficiently high granularity to be able to identify enough the user, the secret information becomes unnecessary.

This embodiment corresponds to the application example of the 1 : 1 cancelable collation. Besides, the 1 : N cancelable collation is applicable to as another example. In this case, the indication or entering of the user ID is unnecessary. In addition, when the 1 : N cancelable collation is applicable, the user does not require to store the user ID or record in the recording medium since the identical person can be verified without entering the user ID, so that the convenience for user can be improved.

It should be further understood by those skilled in the art that although the foregoing description has been made on embodiments of the invention, the invention is not limited thereto and various changes and modifications may be made without departing from the scope of the appended claims, as interpreted using the description and drawings.

## Claims

1. A registration method of biologic information in a biometric authentication system including a registration station server (110) and a biometric authentication server (100), comprising the steps of:
implementing by the registration station server including steps of;
(a1) acquiring personal information (P) from a user to specify a person,
(a2) generating a characteristic value of the personal information,
(a3) acquiring biologic information of the user,
(a4) generating a template (T) from the biologic information acquired from the user;
(a5) generating an anonymous ID (AID) to be an identifier of the person,
(a6) storing the characteristic value of the personal information, as set the anonymous ID to a key, in a characteristic value database, and
(a7) transmitting the anonymous ID and the template to the biometric authentication server,
implementing by the biometric authentication server (100) including a step of;
(b1) registering the template in a template database (101) as set the anonymous ID to a key, and
implementing by the registration station server (110) including a step of;
(c1) deleting acquired personal information and generated template.

2. The method according to claim 1 wherein, prior to the step (a2) of generating the characteristic value of the personal information (P),
the step of implementing by the registration station server (110) includes a step of generating secret information (S) different for every user such that the characteristic value of the personal information becomes unique between the users, when generating the characteristic value of the personal information,
the step (a2) of generating the characteristic value of the personal information includes a step of generating the characteristic value of data combined the personal information with the secret information,
the step (a4) of generating the template includes a step of issuing the secret information, and
the step of implementing by the biometric authentication server (100) includes a step of registering the secret information in a secret information database (105).

3. An application method of applying to use a template (T) to authenticate a person in a biometric authentication system including a client server (130), an application server (120) and a registration station server (110), comprising the steps of:
implementing by the client server including steps of;
(a1) acquiring an anonymous ID (AID) to be an identifier of the person from a user,
(a2) generating a user ID (UID) of an account to use an application,
(a3) acquiring personal information (P) from the user to specify the person, and (a4) transmitting the anonymous ID, the user ID and the personal information to the application server,
implementing by the application server including steps of;
(b1) generating a characteristic value of the personal information, and
(b2) transmitting the anonymous ID and the characteristic value of the personal information to the registration station server,
implementing by the registration station server including steps of;
(c1) collating the characteristic value of the personal information registered in a characteristic value database with the characteristic value of the personal information received from the application server, and
(c2) transmitting a collated result to the application server, and
implementing by the application server including steps of;
(d1) generating ID transformation information to transform the user ID into the anonymous ID when the collation is succeeded,
(d2) registering the ID transformation information in an ID transformation database (121), and
(d3) generating and storing information for managing the user.

4. The method according to claim 3 wherein the step (d1) of generating the ID transformation information includes a step of generating a table, as the transformation information ID, corresponded to the anonymous ID and the user ID.

5. The method according to claim 3 wherein the step (d1) of generating the ID transformation information includes a step of setting the ID transformation information to a cryptographic key of a symmetric-key cryptography to set data encrypted with the anonymous ID (AID) to the user ID (UID) by using the symmetric-key cryptography.

6. The method according to claim 3 wherein the step (b1) of generating the characteristic value of the personal information (P) includes a step of using a password, as the personal information, generated in the registration station server (110).

7. The method according to claim 3 wherein the biometric authentication system provides a biometric authentication server (100) having a template database (101) and a secret information database (105), prior to the step of transmitting the anonymous ID (AID), the user ID (UID) and the personal information to the application server (120),
the method comprises the steps of:
implementing by the client server (130) including steps of;
(e1) acquiring biologic information of the user,
(e2) generating collation data from the biologic information acquired from the user, and
(e3) transmitting the anonymous ID and the collation data to the biometric authentication server (100), and
implementing by the biometric authentication server including steps of;
(f1) collating a template (T) read out from the template database (101), as set the anonymous ID to a key, with the collation data, and
(f2) transmitting secret information (S) read out from the secret information database, as set the anonymous ID to a key, to the application server when the collation is succeeded, and
the step (b1) of generating the characteristic value of the personal information (P) in the application server (120) comprises a step of generating the characteristic value of data combined the personal information with the secret information.

8. The method according to claim 3 wherein the step (b1) of generating the characteristic value of the personal information (P) includes a step of combining the personal information with secret information with a condition of a bit sequence to give to a hash function and generate the characteristic value.

9. The method according to claim 3 wherein the step (b1) of generating the characteristic value of the personal information (P) includes a step of combining with secret information (S) for every item to give to a hash function and generate the characteristic value when plural items exist in the personal information.

10. The method according to claim 3 wherein
the step of implementing by the client server (130), in place of the step (a1) of acquiring the anonymous ID from the user, includes steps of acquiring the biologic information of the user to extract an amount of characteristic from the acquired biologic information and generate the collation data in accordance with the extracted amount of characteristic and of transmitting the collation data to the biometric authentication server (100), and
the step of implementing by the biometric authentication server (100) includes steps of;
searching the anonymous ID becoming a key of a mostly similar template to the collation data, as set the anonymous ID to a key, from a template database (101), and
transmitting secret information (S) read out from a secret information database (105), as set the searched anonymous ID to a key, to the application server (120).

11. An authentication method in a biometric authentication system including a biometric authentication server (100) providing a client server (130), an application server (120) and a template database (101), comprising the steps of:
implementing by the client server including steps of;
(a1) acquiring a user ID (UID) from a user,
(a2) acquiring biologic information from the user, and
(a3) transmitting the user ID and an authentication request to the application server;
implementing by the application server including a step of;
(b1) transforming the user ID into an anonymous ID (AID) by using ID transformation information for transforming the user ID into the anonymous ID;
implementing by the client server including steps of;
(c1) generating collation data from the biologic information, and
(c2) transmitting the collation data to the application server,
implementing by the application server including a step of;
(d1) transmitting the anonymous ID and the collation data to the biometric authentication server,
implementing by the biometric authentication server including a step of;
(e1) collating a template (T) read out from the template database, as set the anonymous ID to a key, with the collation data, and
implementing by the application server including a step of;
(f1) supplying an application to the user when a collation is succeeded.

12. The method according to claim 11 wherein the step of implementing by the application server (120) includes a step of generating a table corresponded to the anonymous ID and the user ID as the ID transformation information.

13. The method according to claim 11 wherein the step of implementing by the application server (120) includes a step of setting the ID transformation information to a cryptographic key of a symmetric-key cryptography to set data encrypted with the anonymous ID to the user ID by using the symmetric-key cryptography.

14. The method according to claim 11 wherein the biometric authentication system includes a parameter server (140), and
the step (c1) of generating the collation data in the client server (130) includes steps of;
extracting an amount of characteristic from the biologic information, and transforming the extracted amount of characteristic to generate the collation data by using a parameter (R) acquired from the parameter server (140) so that the amount of characteristic is transformed.

15. The method according to claim 11 wherein
the step of implementing by the client server (130), in place of the step (a1) of acquiring the user ID (UID) from the user, includes steps of;
acquiring the biologic information of the user to extract an amount of characteristic from the acquired biologic information and generate the collation data in accordance with the extracted amount of characteristic, and
transmitting the collation data to the biometric authentication server (100), the step of implementing by the biometric authentication server includes steps of;
searching the anonymous ID becoming a key of a mostly similar template to the collation data, as set the anonymous ID (AID) to a key, from the template database (101) registered the template (T), and
transmitting secret information (S) read out from a secret information database (105), as set the searched anonymous ID to a key, to the application server (120), and
the step of implementing by the application server includes a step of;
transmitting the searched anonymous ID into the user ID by using the ID transformation information to supply the application to the user corresponding to the user ID.
